# EUROPÄISCHE PATENTSCHRIFT

(11) **EP 2 840 526 B1**
(45) Veröffentlichungstag und Bekanntmachung des Hinweises auf die Patenterteilung: **02.08.2023**
(21) Anmeldenummer: 14001281.6
(22) Anmeldetag: 08.04.2014
(51) Int. Cl.: G06K 7/10

(54) **System zum Schreiben von RFID-Transpondern**
System for writing RFID transponders
Système d'écriture de transpondeurs RFID

(30) Priorität: 15.05.2013 DE 202013004511 U
(43) Veröffentlichungstag der Anmeldung: 25.02.2015
(73) Patentinhaber: CHECKPOINT SYSTEMS, INC., Thorofare, NJ 08086 (US)
(72) Erfinder: Bremer, Peter, 64743 Beerfelden (DE)
(74) Vertreter: Ström & Gulliksson AB

(56) Entgegenhaltungen:
- EP-A2- 1 643 413
- US-A1- 2010 165 387

## Beschreibung

Die vorliegende Erfindung betrifft ein System zum Schreiben von RFID-Transpondern.

Aus der DE 698 26 284 T2 ist ein Inventarsteuersystem für Artikel bekannt, die in einem Lagerbereich gehalten werden. An jedem der Artikel ist ein RFID-Transponder, der auch als Radiofrequenzetikett bezeichnet werden kann, befestigt. Jeder RFID-Transponder weist eine Antenne auf zur Verwendung bei dem Erkennen des Vorhandenseins des Artikels durch Empfangen eines Abfragesignals und Zurücksenden eines Antwortsignals. Jeder RFID-Transponder weist eine integrierte Schaltung auf, die mit der Antenne verbunden ist, zum Speichern von Artikelidentifikationsinformation und zum Abgeben der Artikelidentifikationsinformation mit dem Antwortsignal bei Befragung des RFID-Transponders. Das System weist einen Artikelrückgabebereich zum Empfangen von Artikeln auf. Der Artikelrückgabebereich weist eine Abfragezone auf, durch die die Artikel hindurchbewegt werden.

In der Bekleidungsindustrie werden in der Regel Bekleidungsstücke unterschiedlicher Art, Form, Größe, Farbe oder dergleichen, beispielsweise einem Orderauftrag zugeordnet, gesammelt. Dies erfolgt zum Beispiel unmittelbar nach dem Nähen und Bügeln der Bekleidungsstücke oder zum Beispiel aus einem Kollektionslager heraus, in dem gleiche Bekleidungsstücke gruppiert und geordnet gelagert sind. Beispielsweise werden von einem Kunden zehn Sakkos blau, zehn Sakkos schwarz, drei Hosen grau, vier Hosen anderer Machart mit einem Auftrag geordert. Zur maschinellen Bewältigung dieser Sortier- und Verteilarbeit sind Sortiervorrichtungen, sogenannte Sortierer bekannt, die mit elektronischen Erfassungseinrichtungen und elektronisch gesteuerten Schalteinrichtungen ausgerüstet sind. Diese Sortiervorrichtungen können die auf Kleiderbügeln hintereinander hängenden Bekleidungsstücke während des Transports registrieren und die Kleiderbügel mittels einer Fördereinrichtung z.B. auf Schienensystemen transportieren, in denen elektronisch schaltbare Schleuseneinrichtungen an bestimmten Stellen eines Förderweges eingebaut sind. Durch eine aufgrund der Registrierung vorprogrammierte Schaltung wird eine bestimmte Schleuse geöffnet, wenn ein bestimmtes elektronisch erfasstes Bekleidungsstück sich im Schleusenraum befindet. Der Kleiderbügel mit dem bestimmten Bekleidungsstück verlässt durch die Schleuse die Kleiderbügelreihe und gelangt zum Beispiel auf eine Sammelschiene, auf der eine Kollektionsorder zum Abtransport gesammelt wird. Aus der WO 93/03985 sind hierfür ein Verfahren und eine Vorrichtung zum Sortieren von an Haken hängendem Gut bekannt.

Aus der US 7,336,167 B2 ist ein System und ein Verfahren zur Abfrage von RFID-Transpondern bekannt, das bei einer Rotation von Stückgut auf einer Palette durchgeführt wird. Die Rotation und der Lesevorgang werden solange fortgeführt bis alle RFID-Transponder auf der Palette gelesen wurden.

Der Erfindung liegt die Aufgabe zu Grunde, ein System zum Schreiben von RFID-Transpondern möglichst zu verbessern.

Diese Aufgabe wird durch ein System mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein System zum Schreiben von RFID-Transpondern einer Menge von mittels eines Förderers entlang eines Förderweges transportiertem Stückgut vorgesehen.

Das System weist eine Leseeinrichtung zum Lesen der RFID-Transponder beim Transport entlang des Förderweges auf. Die Leseeinrichtung ist vorzugsweise als so genannter Reader ausgebildet und vorzugsweise ausschließlich zum Lesen der RFID-Transponder eingerichtet. Ein Schreiben (engl. encode) der RFID-Transponder erfolgt hingegen vorzugsweise nicht durch die Leseeinrichtung.

Das System weist eine erste Schreibeinrichtung zum Schreiben der RFID-Transponder mit Daten beim Transport entlang des Förderweges auf. Das Schreiben kann auch als Kodieren (engl. encode) bezeichnet werden.

Das System weist eine Schaltung auf. Die Schaltung ist mit der Leseeinrichtung und mit der ersten Schreibeinrichtung verbunden. Jede Verbindung ist beispielsweise eine elektrische Verbindung über ein Kabel oder Netzwerk, wie beispielsweise LAN oder drahtlos beispielsweise per WLAN.

Die Leseeinrichtung und die erste Schreibeinrichtung sind voneinander distanziert am Förderweg angeordnet. Vorzugsweise weisen die Leseeinrichtung und die erste Schreibeinrichtung zueinander einen Abstand von mindestens zwei Metern auf. Wird der Abstand unterschritten, sind die Leseeinrichtung und die erste Schreibeinrichtung vorzugsweise durch eine Schirmungseinrichtung voneinander beabstandet.

Die Schaltung ist eingerichtet, jeden mittels der Leseeinrichtung ausgelesenen Identifikator jedes RFID-Transponders, der an einem Stück der Menge befestigt ist, der Menge - insbesondere mittels einer Mengenkennung - zuzuordnen. Die Schaltung ist eingerichtet, mit der Zuordnung den endgültigen Code zum Schreiben des RFID-Transponders zu bestimmen.

Die Schaltung ist eingerichtet, eine erste Untermenge der Menge zu bilden. Das System ist eingerichtet die erste Untermenge dynamisch zu bilden. Es wird die erste Untermenge basierend auf der Anzahl der Elemente der Menge - beispielsweise als Bruchteil derselben - erstellt.

Die Schaltung ist eingerichtet, die zur ersten Untermenge zugehörigen Identifikatoren an die erste Schreibeinrichtung zu senden, um die Daten auf die RFID-Transponder der ersten Untermenge mittels der ersten Schreibeinrichtung zu schreiben.

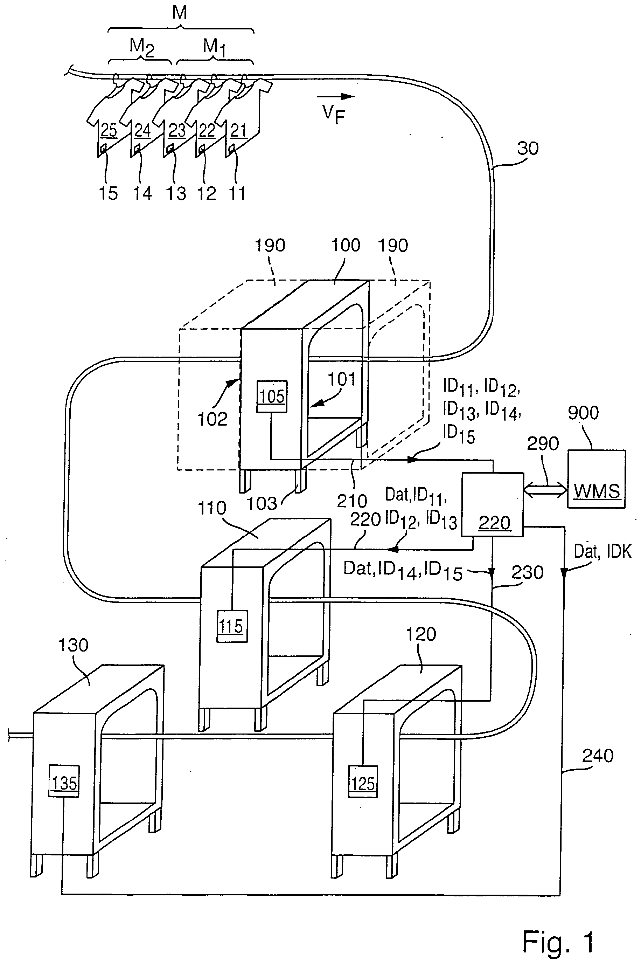

Durch eine konkrete Umsetzung des Systems, wie es beispielsweise in der Fig. 1 dargestellt ist, werden eine Vielzahl von Vorteilen erzielt. Durch die Aufteilung des Lesevorgänge und der Schreibvorgänge auf die getrennten Leseeinrichtung und Schreibeinrichtung kann eine Transportgeschwindigkeit unverändert hoch bleiben und muss nicht verringert werden, um alle Transponder sicher zu lesen und zu schreiben. Die Modularität durch die Aufteilung in Leseeinrichtung und erste Schreibeinrichtung ermöglicht es, das System auch bei bereits bestehenden Förderanlagen einfach installieren zu können, ohne die Förderanlage wesentlich verändern zu müssen.

Durch eine konkrete Umsetzung des Systems entsprechend den zuvor genannten Weiterbildungen, wie es beispielsweise in der Fig. 1 dargestellt ist, werden ebenfalls eine Vielzahl von Vorteilen erzielt. Durch die Aufteilung der Schreibvorgänge auf mehrere (zumindest zwei) Schreibeinrichtungen kann selbst bei hoher Transponderdichte die Transportgeschwindigkeit unverändert hoch bleiben und muss nicht verringert werden, um alle Transponder sicher zu schreiben. Die Modularität durch die Aufteilung in erste Schreibeinrichtung und zweite Schreibeinrichtung ermöglicht es, das System auch bei bereits bestehenden Förderanlagen einfach installieren zu können, ohne die Förderanlage wesentlich verändern zu müssen. Zudem kann eine hohe Fördergeschwindigkeit erzielt werden.

Gemäß einer vorteilhaften Weiterbildung weist die Leseeinrichtung eine Lesezone auf, durch die der Förderweg führt, um jedes Stück mit RFID-Transponder mittels des Förderers hindurch zu bewegen. Vorzugsweise ist die Lesezone in einem Gehäuse der Leseeinrichtung ausgebildet. Vorzugsweise weist das Gehäuse ein elektrisch leitfähiges Material auf. Vorteilhafterweise hat das elektrisch leitfähige Material des Gehäuses schirmende Eigenschaften.

Gemäß einer vorteilhaften Weiterbildung weist die erste Schreibeinrichtung eine erste Schreibzone auf, durch die der Förderweg führt, um jedes Stück mit RFID-Transponder mittels des Förderers hindurch zu bewegen. Vorzugsweise ist die erste Schreibzone in einem Gehäuse der ersten Schreibeinrichtung ausgebildet. Vorzugsweise weist das Gehäuse ein elektrisch leitfähiges Material auf. Vorteilhafterweise hat das elektrisch leitfähige Material des Gehäuses schirmende Eigenschaften.

Gemäß einer vorteilhaften Weiterbildung weist die zweite Schreibeinrichtung eine zweite Schreibzone auf, durch die der Förderweg führt, um jedes Stück mit RFID-Transponder mittels des Förderers hindurch zu bewegen. Vorzugsweise ist die zweite Schreibzone in einem Gehäuse der zweiten Schreibeinrichtung ausgebildet. Vorzugsweise weist das Gehäuse ein elektrisch leitfähiges Material auf. Vorteilhafterweise hat das elektrisch leitfähige Material des Gehäuses schirmende Eigenschaften.

Gemäß einer vorteilhaften Weiterbildung weist die Leseeinrichtung zur Durchführung des Stückguts entlang des Förderweges eine Eingangsöffnung und eine Ausgangsöffnung auf. Vorzugsweise ist die Leseeinrichtung zur Einstellung einer Höhe und/oder einer Breite der Eingangsöffnung und/oder der Ausgangsöffnung ausgebildet. Vorzugsweise ist die Eingangsöffnung und/oder die Ausgangsöffnung durch elektrisch leitfähiges Material des Gehäuses der Leseeinrichtung begrenzt. Vorteilhafterweise hat das elektrisch leitfähige Material des Gehäuses schirmende Eigenschaften.

Gemäß einer vorteilhaften Weiterbildung weist die Leseeinrichtung eine Schirmungseinrichtung auf, die an der Eingangsöffnung und/oder an der Ausgangsöffnung angrenzend ausgebildet ist. Die Schirmungseinrichtung ist vorzugsweise eine passive Einrichtung ohne elektrische Einheiten zur Kommunikation mit den Transpondern.

Gemäß einer vorteilhaften Weiterbildung führt der Förderweg durch die Schirmungseinrichtung.

Gemäß einer vorteilhaften Weiterbildung ist die erste Schreibeinrichtung eingerichtet, die Daten auf die RFID-Transponder der ersten Untermenge sequenziell zu schreiben basierend auf einer vorbestimmten Reihenfolge der Identifikatoren der ersten Untermenge.

Gemäß einer vorteilhaften Weiterbildung ist die zweite Schreibeinrichtung eingerichtet, die Daten auf die RFID-Transponder der zweiten Untermenge sequenziell zu schreiben basierend auf einer vorbestimmten Reihenfolge der Identifikatoren der zweiten Untermenge.

Gemäß einer vorteilhaften Weiterbildung sind die RFID-Transponder in Kleidungsstücke als Stückgut eingefasst. Die RFID-Transponder können als sogenannte Softtags oder Hardtags ausgebildet sein.

Gemäß einer vorteilhaften Weiterbildung ist die Schaltung eingerichtet, die Identifikatoren und die Daten an die erste Schreibeinrichtung und/oder an die zweite Schreibeinrichtung basierend auf einer Abfolge mehrerer Mengen zu senden.

Ein weiterer Aspekt sieht ein Verfahren zum Schreiben von RFID-Transpondern einer Menge von mittels eines Förderers entlang eines Förderweges transportiertem Stückgut gemäß Anspruch 7 vor.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1: eine schematische Ansicht eines Systems,
- Fig. 2: eine weitere schematische Ansicht eines Systems, und
- Fig. 3: ein schematisches Diagramm eines Ablaufs.

In Fig. 1 ist eine Förderanlage dargestellt, die Kleidungstücke 21, 22, 23, 24, 25 als Stückgut entlang des Förderweges 30 transportiert. In Fig. 1 sind lediglich fünf Kleidungstücke 21, 22, 23, 24, 25 für eine bessere Übersichtlichkeit dargestellt. Hingegen wird in einer konkreten Umsetzung die Zahl der Kleidungstücke 21, 22, 23, 24, 25 in einer Menge M wesentlich höher ausfallen. Derartige Anlagen werden beispielsweise bei Textilherstellern oder Textilgroßhändlern verwendet. Die Stücke 21, 22, 23, 24, 25 werden dabei kontinuierlich befördert. Ein derartiger Förderer kann auch als Stetigförderer bezeichnet werden. Fig. 1 zeigt auf Kleiderbügel gehängte Kleidungsstücke 21, 22, 23, 24, 25, die mittels einer Schiene entlang des Förderweges 30 transportiert werden. Dabei wird eine hohe Transportgeschwindigkeit VF verlangt, um die Kosten niedrig zu halten.

In der Bekleidungsindustrie werden in der Regel Kleidungsstücke gleicher Art, Form, Größe, Farbe etc. beispielsweise der Menge M hergestellt. Zur Herstellung werden die Kleidungsstücke beispielsweise genäht und gebügelt. Jedem Kleidungsstück 21, 22, 23, 24, 25 wird genau ein RFID-Transponder zugeordnet. Der RFID-Transponder wird an dem zugeordneten Kleidungstücke 21, 22, 23, 24, 25 befestigt, indem der RFID-Transponder beispielsweise Bestandteil eines eingenähten Typenschildes ist oder separat in einen Saum eingenäht wird. Die mit dem RFID-Transponder versehenden Kleidungsstücke 21, 22, 23, 24, 25 werden im Ausführungsbeispiel der Fig. 1 auf Bügel gehängt und der Bügel mit der Förderanlage z.B. auf einem Schienensystem bewegt.

Gezeigt sind in Fig. 1 beispielhaft fünf Kleidungsstücke 21, 22, 23, 24, 25 der Menge M, die alle identisch gefertigt sind. Jeder an den Kleidungsstücken 21, 22, 23, 24, 25 befestigter RFID-Transponder 11, 12, 13, 14, 15 ist vorprogrammiert, wobei z.B. Daten des Herstellers auf dem RFID-Transponder 11, 12, 13, 14, 15 gespeichert sind. Ebenfalls hat jeder RFID-Transponder 11, 12, 13, 14, 15 einen Identifikator ID11, ID2, ID13, ID14, ID15, der beispielsweise im RFID-Transponder 11, 12, 13, 14, 15 programmiert ist. Alternativ kann als Identifikator ID11, ID2, ID13, ID14, ID15 auch die Seriennummer des RFID-Transponders 11, 12, 13, 14, 15 verwendet werden.

Im Ausführungsbeispiel der Fig. 1 weist das System eine Leseeinrichtung 100 zum Lesen der RFID-Transponder 11, 12, 13, 14, 15 auf. Die Leseeinrichtung 100 weist eine Anzahl Füße 103 mit einer einstellbaren Höhe auf, um die Position der Leseeinrichtung 100 an den Förderer, insbesondere an dessen Bauhöhe anzupassen. Das Gehäuse der Leseeinrichtung 100 weist elektrisch leitfähiges Material - wie beispielsweise Blech oder Aluminium - auf. Das leitfähige Material bewirkt eines Schirmungseigenschaft des Gehäuses.

Im Ausführungsbeispiel der Fig. 1 weist die Leseeinrichtung 100 eine Eingangsöffnung 101 und eine Ausgangsöffnung 102 auf, die einen Durchgang bilden, durch den der Förderweg 30 hindurchführt. Die Leseeinrichtung 100 ist ausgebildet, eine Höhe und/oder eine Breite der Eingangsöffnung 101 und/oder der Ausgangsöffnung 102 für unterschiedliche Größen des Stückguts einzustellen. Das System ist eingerichtet, dass die Leseeinrichtung 100 die RFID-Transponder 11, 12, 13, 14, 15 vorzugsweise ausschließlich liest. Ein Schreiben der RFID-Transponder 11, 12, 13, 14, 15, das auch als Kodieren (engl. encode) bezeichnet werden kann, wird durch die Leseeinrichtung 100 hingegen vorzugsweise nicht durchgeführt.

Aufgrund der hohen Transportgeschwindigkeit VF muss sichergestellt werden, dass eine größtmögliche Anzahl der RFID-Transponder 11, 12, 13, 14, 15 der Menge M gelesen wird. Die Leseeinrichtung 100 ist für den Leseprozess optimiert. Dabei werden die Kleidungsstücke 21, 22, 23, 24, 25 der Menge M üblicherweise dicht hintereinander transportiert, so dass in einem Lesebereich der Leseeinrichtung 100 eine hohe Dichte von RFID-Transpondern 11, 12, 13, 14, 15 vorliegt. Da Lesevorgänge kürzer dauern als Schreibvorgänge, kann so auf einem relativ kleinen Abschnitt des Förderweges 30 ein Lesen der RFID-Transponder 11, 12, 13, 14, 15 bei hoher Transponderdichte beim Transport entlang des Förderweges 30 ermöglicht werden.

Tritt beim Lesevorgang eine hohe Kollisionsrate auf, kann der Abstand zu weiteren RFID-Transpondern, beispielsweise einer vorhergehenden oder nachfolgenden Menge vergrößert werden. Im Ausführungsbeispiel der Fig. 1 ist hingegen eine Schirmungseinrichtung 190 an der Eingangsöffnung 101 und der Ausgangsöffnung 102 vorgesehen, die die Anzahl der durch die Leseeinrichtung erfassbaren RFID-Transponder signifikant reduziert und somit auch die Kollisionsrate deutlich senkt. Ein Gehäuse der Schirmungsvorrichtung 190 weist zur Schirmung ein elektrisch leitfähiges Material auf. Die Schirmungseinrichtung 190 weist ebenfalls einen Durchgangsbereich auf, durch den der Förderweg 30 führt.

Die Leseeinrichtung 100 ist über eine Verbindung 210 mit einer Schaltung 200 verbunden. Die Schaltung 200 ist beispielsweise ein Computer, der über eine LAN-Verbindung 210 an die Leseeinrichtung 100 angeschlossen ist. Über die Verbindung 210 werden die Identifikatoren ID11, ID12, ID13, ID14, ID15 der gelesenen RFID-Transponder 11, 12, 13, 14, 15 an die Schaltung 200 übertragen. Die Leseeinrichtung 100 weist eine Kontrolleinrichtung 105 auf, die den Lesevorgang und die Kommunikation über die Verbindung 210 mit der Schaltung 200 steuert.

Die Schaltung 200 ist eingerichtet, jeden mittels der Leseeinrichtung 100 ausgelesenen Identifikator ID11, ID12, ID13, ID14, ID15 jedes RFID-Transponders 11, 12, 13, 14, 15 der Menge M zuzuordnen. Damit ist rechentechnisch erfasst, welche Kleidungsstücke 21, 22, 23, 24, 25 Elemente der Menge M sind. Der Menge M sind zudem Daten Dat zugeordnet. Diese Daten Dat beschreiben Eigenschaften der Kleidungsstücke 21, 22, 23, 24, 25 der Menge M, beispielsweise deren Typ, Größe, Farbe oder dergleichen.

Das System weist eine erste Schreibeinrichtung 110 zum Schreiben der RFID-Transponder 11, 12, 13, 14, 15 mit den Daten Dat auf. Die erste Schreibeinrichtung 110 ist von der Leseeinrichtung 100 zumindest in Förderrichtung distanziert angeordnet. Die Mindestdistanz beträgt zwei Meter. Je größer die Distanz zwischen der ersten Schreibeinrichtung 110 und der Leseeinrichtung 100 desto kleiner sind die Störungen. Bei Unterschreitung des Mindestabstands sind die erste Schreibeinrichtung 110 und die Leseeinrichtung 100 voneinander durch eine Schirmungseinrichtung (190) ausreichender Länge beabstandet. Die Schreibeinrichtung 110 ist für den Schreibprozess zum Schreiben der RFID-Transponder 11, 12, 13, 14, 15 optimiert. Die erste Schreibeinrichtung 110 weist eine Kontrolleinrichtung 115 auf, die den Schreibvorgang und die Kommunikation über eine Verbindung 220 mit der Schaltung 200 steuert.

Die Schaltung 200 ist eingerichtet, eine erste Untermenge M1 der Menge M zu bilden. Beispielsweise werden die drei Kleidungsstück 21, 22, 23 und somit die zugehörigen drei RFID-Transponder 11, 12, 13 und somit die zugehörigen drei Identifikatoren ID11, ID12 und ID13 der ersten Teilmenge M1 zugeordnet. Die Schaltung 200 ist eingerichtet, die zur ersten Untermenge M1 zugehörigen Identifikatoren ID11, ID12, ID13 an die erste Schreibeinrichtung 110 zu senden. Hierzu ist die erste Schreibeinrichtung 110 mit der Schaltung 200 über die Verbindung 220 verbunden.

Zusätzlich zu den Identifikatoren ID11, ID12, ID13 der ersten Untermenge M1 werden die Daten Dat von der Schaltung 200 an die erste Schreibeinrichtung 110 übertragen, um die Daten Dat auf die RFID-Transponder 11, 12, 13 der ersten Untermenge M1 mittels der ersten Schreibeinrichtung 110 zu schreiben. Der Schreibvorgang kann dabei beim Transport der Kleidungsstücke 21, 22, 23, 24, 25 entlang des Förderweges 30 erfolgen, da nicht alle RFID-Transponder 11, 12, 13, 14, 15 der Menge M während der Bewegung der RFID-Transponder 11, 12, 13, 14, 15 durch eine erste Schreibzone der ersten Schreibvorrichtung 110 geschrieben werden.

Mittels der Identifikatoren ID11, ID12, ID13 können die zu beschreibenden RFID-Transponder 11, 12, 13 gezielt (individuell) angesprochen werden. Eine erhöhte Schreibgeschwindigkeit oder eine besonders groß dimensionierte erste Schreibeinrichtung 110 sind aufgrund der reduzierten Elementanzahl der ersten Untermenge M1 und dem direkten Ansprechen der RFID-Transonder 11, 12, 13 der ersten Untermenge M1 nicht erforderlich. Das Schreiben jedes RFID-Transponders 11, 12, 13 der ersten Untermenge M1 wird über die Verbindung 210 an die Schaltung 200 zurückgemeldet.

Von der ersten Schreibvorrichtung 110 distanziert ist eine zweite Schreibvorrichtung 120 entlang des Förderweges 30 angeordnet. Dabei sind die erste Schreibeinrichtung 110 und die zweite Schreibeinrichtung 120 voneinander distanziert am Förderweg 30 angeordnet. Die erste Schreibvorrichtung 110 und die zweite Schreibvorrichtung 120 sind gleich ausgebildet. Die Schaltung 200 ist auch mit der zweiten Schreibeinrichtung 120 über eine Verbindung 230 verbunden. Die zweite Schreibeinrichtung 120 weist eine Kontrolleinrichtung 125 auf, die den Schreibvorgang und die Kommunikation über die Verbindung 230 mit der Schaltung 200 steuert.

Die Schaltung 200 ist eingerichtet, eine zweite Untermenge M2 der Menge M aus in der ersten Schreibeinrichtung 110 nicht-geschriebenen RFID-Transpondern 14, 15 zu bilden. Die zweite Untermenge M2 ist dabei disjunkt zur ersten Untermenge M1, wenn alle RFID-Trarisponder 11, 12, 13 der ersten Untermenge M1 geschrieben wurden. Ist hingegen das Schreiben eines RFID-Transponders 11, 12, 13 der ersten Untermenge M1 fehlgeschlagen, kann der Schreibvorgang für diesen RFID-Transponder mittels der zweiten Schreibvorrichtung 120 wiederholt werden. Die Anzahl nicht oder fehlerhaft beschriebener RFID-Transponder kann hierdurch signifikant reduziert werden.

Die Schaltung 200 ist eingerichtet, die zur zweiten Untermenge M2 zugehörigen Identifikatoren ID14, ID15 an die zweite Schreibeinrichtung 120 über die Verbindung 230 zu senden. Zusätzlich zu den Identifikatoren ID14, ID15 der zweiten Untermenge M2 werden die Daten Dat von der Schaltung 200 an die zweite Schreibeinrichtung 120 übertragen, um die Daten Dat auf die RFID-Transponder 14, 15 der zweiten Untermenge M2 mittels der zweiten Schreibeinrichtung 120 zu schreiben. Auch mittels der zweiten Schreibeinrichtung 120 erfolgt das Schreiben der RFID-Transponder 14, 15 während des Transports der Kleidungsstücke 21, 22, 23, 24, 25 entlang des Förderweges 30. Der Transport entlang des Förderweges 30muss also weder für den Lesevorgang noch für den Schreibvorgang angehalten werden.

Die Schreibeinrichtungen 110 und 120 können entlang des Förderweges 30 nahezu beliebig positioniert werden. Eine Veränderung des Förderweges 30 ist nur in Ausnahmefällen erforderlich. Auch bei einer Veränderung des Förderweges 30 können die Position der Lese- und Schreibbeinrichtungen 100, 110, 120 leicht angepasst werden. Die Fördergeschwindigkeit VF kann aufgrund der Aufteilung der Schreibvorgänge auf mehrere unabhängige Schreibeinrichtungen 110, 120 unverändert beibehalten werden.

Die Menge M kann abweichend von dem Ausführungsbeispiel der Fig. 1 auf eine größere Zahl von Untermengen aufgeteilt werden, wenn eine sehr große Dicht von RFID-Transpondern vorliegt. In einem Ausführungsbeispiel der Fig. 1 ist zusätzlich eine dritte Schreibeinrichtung 130 mit einer Kontrolleinrichtung 135 vorgesehen. Die Kontrolleinrichtung 135 ist ebenfalls mit der Schaltung 200 über eine Verbindung 240 verbunden. Die dritte Schreibeinrichtung 130 ist von der zweiten Schreibeinrichtung 120 zur Reduktion der Störungen distanziert angeordnet. Mittels der dritten Schreibeinrichtung 130 können die RFID-Transponder geschrieben werden, deren Schreibvorgang zuvor in der ersten oder zweiten Schreibeinrichtung 110, 120 gescheitert ist. Entsprechend wird der Identifikator IDK des zugehörigen RFID-Transponders von der Schaltung 200 an die dritte Schreibeinrichtung 130 übertragen. Kann der RFID-Transponder auch in der dritten Schreibeinrichtung 130 nicht geschrieben werden, wird zum Identifikator IDK eine Fehlermeldung ausgegeben.

Die Schaltung 200 ist in einem Ausführungsbeispiel der Fig. 1 mit einer Schnittstelle 290 zu einem Warenhaus-Managementsystem 900 (WMS) verbunden. Über die Schnittstelle 290 können zu den Schreibvorgängen zugehörige Datensätze an das Warenhaus-Managementsystem 900 zur weiteren Verarbeitung - beispielsweise zur maschinellen Sortier- und Verteilarbeit mittels einer Sortiervorrichtung, eines sogenannten Sortierers - übertragen werden.

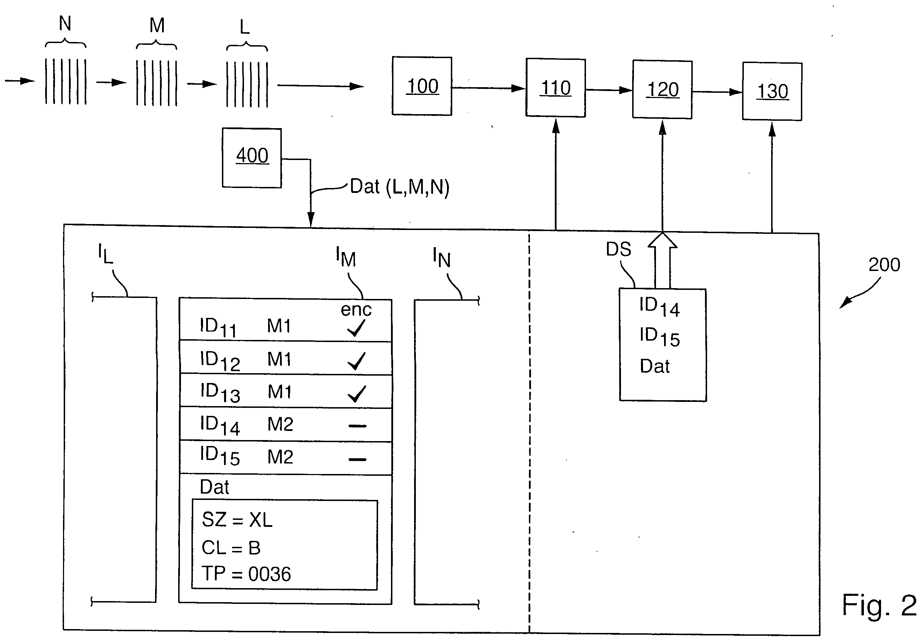

Fig. 2 zeigt schematisch Funktionen der Schaltung 200. Für die Mengen L, M und N sind in dem Speicher der Schaltung 200 Datensätze, beispielsweise in Form von Tabellen gespeichert. Jede Tabelle weist eine zur Menge L, M, N zugehörige Kennung IL, IM, IN auf (Tabellenname oder Metatag). Jeder Datensatz enthält Daten Dat, die jedes Stück der Menge L, M, N beschreiben. Die Daten Dat sind beispielsweise die Größe SZ, die Farbe CL oder der Typ TP der Kleidungsstücke der jeweiligen Menge. Die Daten Dat werden beispielweise über ein Eingabegerät 400 manuell oder automatisch ins System eingegeben und in der Schaltung 200 gespeichert.

Weiterhin enthält die Tabelle die Identifikatoren ID11, ID12, ID13, ID14, ID15 aller RFID-Transponder der Menge M. Jeder Identifikator ID11, ID12, ID13, ID14, ID15 ist einer Untermenge M1, M2 zugeordnet. In Fig. 2 ist die Situation dargestellt, in der die RFID-Transponder 11, 12, 13 der ersten Untermenge M1 bereits geschrieben sind. Entsprechend wird ein Datensatz DS mit den Identifikatoren ID14, ID15 der zweiten Untermenge M2 und mit den Daten Dat an die zweite Schreibeinrichtung 120 ausgegeben.

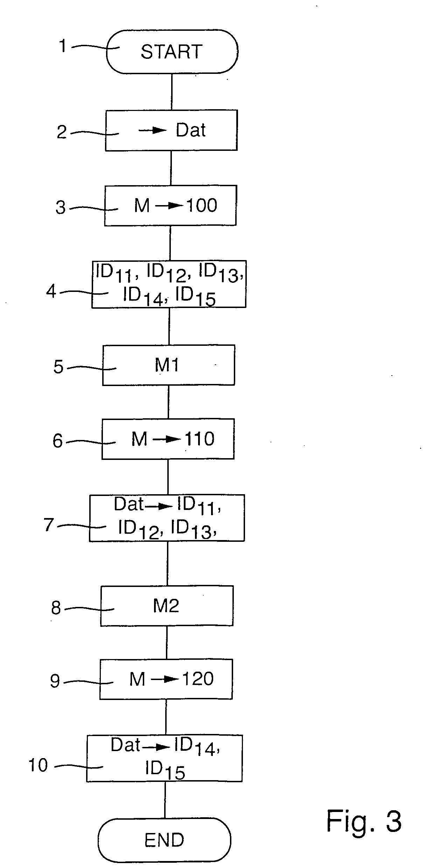

Fig. 3 zeigt ein Ausführungsbeispiel eines Ablaufs in einem schematischen Diagramm. In einem ersten Schritt 1 wird das System gestartet und hochgefahren. Im folgenden zweiten Schritt 2 werden die Daten Dat für eine Menge M von Kleidungsstücken eingelesen. Im folgenden dritten Schritt 3 werden die Stücke der Menge M in einer Leseeinrichtung 100 erkannt, indem die Leseeinrichtung 100 beispielweise fortlaufend liest und noch nicht gelesene RFID-Transponder durch das System erkannt werden. Alternativ kann auch ein spezielles Mittel (bspw. manuelle Eingabe, Scanner etc.) zur Erkennung der Menge M vorgesehen sein.

Im vierten Schritt 4 werden Identifikatoren ID11, ID12, ID13, ID14, ID15 durch Lesen der RFID-Transponder ermittelt. Alle gelesenen Identifikatoren ID11, ID12, ID13, ID14, ID15 gehören zu der Menge M.

Im fünften Schritt 5 wird anhand der Menge M eine erste Untermenge M1 mit einer Anzahl zugehöriger Identifikatoren ID11, ID12, ID13 gebildet und die Identifikatoren ID11, ID12, ID13 der ersten Untermenge M1 werden an eine erste Schreibeinrichtung 110 übertragen. Wird im sechsten Schritt 6 das Erreichen der ersten Schreibeinrichtung 110 durch die Stücke der Menge M erkannt, werden im nachfolgenden siebten Schritt 7 die Daten Dat auf die zu den Identifikatoren ID11, ID12, ID13 der ersten Untermenge M1 gehörigen RFID-Transponder geschrieben.

Im achten Schritt 8 wird eine zweite Untermenge M2 mit einer Anzahl zugehöriger Identifikatoren ID14, ID15 gebildet und die Identifikatoren ID14, ID15 der zweiten Untermenge M2 werden an eine zweite Schreibeinrichtung 120 übertragen. Wird im neunten Schritt 9 das Erreichen der zweiten Schreibeinrichtung 120 durch die Stücke der Menge M erkannt, werden im nachfolgenden zehnten Schritt 10 die Daten Dat auf die zu den Identifikatoren ID14, ID15 der zweiten Untermenge M2 gehörigen RFID-Transponder geschrieben.

Die Erfindung ist nicht auf die dargestellten Ausgestaltungsvarianten der Figuren 1 bis 3 beschränkt. Beispielsweise ist es möglich, eine größere Anzahl von Schreibeinrichtungen oder eine Mehrzahl von Leseeinrichtungen zu verwenden. Auch ist es möglich, die erste Untermenge M1 gleich der Menge M zu setzen und die nicht beschriebenen RFID-Transponder nach der Rückmeldung durch die erste Schreibeinrichtung der zweiten Untermenge M2 zuzuordnen. Die Funktionalität des Systems gemäß Fig. 1 kann besonders vorteilhaft für eine elektronische Kennzeichnung von Textilien verwendet werden. Die Lösung gemäß Fig. 1 ist auch auf alle anderen Fördersysteme, wie beispielsweise Rollen oder dergleichen anwendbar. Die Stücke des Stückguts können offen oder in einem Transportbehälter (Karton) befördert werden.

### Bezugszeichenliste

- 11, 12, 13, 14, 15: RFID-Transponder
- 21, 22, 23, 24, 25: Stück, Kleidungsstück
- 30: Förderweg
- 100: Leseeinrichtung
- 101: Eingangsöffnung
- 102: Ausgangsöffnung
- 110, 120, 130: Schreibeinrichtung
- 105, 115, 125, 135: Kontrolleinrichtung
- 200: Schaltung, Computer
- 210, 220, 230, 240: Verbindung
- 290: Schnittstelle
- 400: Eingabevorrichtung
- 900: Warenhaus-Management-System
- L, M, N: Menge
- M1, M2: Untermenge
- IL, IM, IN: Mengenkennung
- ID11, ID12, ID13, ID14, ID15, IDK: Identifikator
- Dat: Daten
- VF: Transportgeschwindigkeit

## Patentansprüche

1. System zum Schreiben von RFID-Transpondern (11, 12, 13, 14, 15) einer Menge (M) von mittels eines Förderers entlang eines Förderweges (30) transportiertem Stückgut (21, 22, 23, 24, 25),
- mit einer Leseeinrichtung (100) zum Lesen der RFID-Transponder (11, 12, 13, 14, 15) beim Transport entlang des Förderweges (30),
- mit einer ersten Schreibeinrichtung (110) zum Beschreiben der RFID-Transponder (11, 12, 13, 14, 15) mit Daten (Dat) beim Transport entlang des Förderweges (30),
- mit einer Schaltung (200), die mit der Leseeinrichtung (100) und mit der ersten Schreibeinrichtung (110) verbunden ist,
- bei dem die Leseeinrichtung (100) und die erste Schreibeinrichtung (110) voneinander distanziert am Förderweg (30) angeordnet sind,
- bei dem die Schaltung (200) eingerichtet ist, jeden mittels der Leseeinrichtung (100) ausgelesenen Identifikator (ID11, ID12, ID13, ID14, ID15) jedes RFID-Transponders (11, 12, 13, 14, 15) der Menge (M) zuzuordnen, wobei der RFID-Transponders (11, 12, 13, 14, 15) an einem Stück (21, 22, 23, 24, 25) der Menge (M) befestigt ist,
- bei dem die Schaltung (200) eingerichtet ist, eine erste Untermenge (M1) der Menge (M) zu bilden, und die Untermenge (M1) ist ein Bruchteil der Menge (M),
- bei dem die Schaltung (200) eingerichtet ist, die zur ersten Untermenge (M1) zugehörigen Identifikatoren (ID11, ID12, ID13) an die erste Schreibeinrichtung (110) zu senden, um die Daten (Dat) auf die RFID-Transponder (11, 12, 13) der ersten Untermenge (M1) mittels der ersten Schreibeinrichtung (110) zu schreiben,
- mit einer zweiten Schreibeinrichtung (120) zum Beschreiben der RFID-Transponder (11, 12, 13, 14, 15) mit Daten (Dat) beim Transport entlang des Förderweges (30),
- bei dem die Schaltung (200) mit der zweiten Schreibeinrichtung (120) verbunden ist,
- die erste Schreibeinrichtung (110) und die zweite Schreibeinrichtung (120) voneinander distanziert am Förderweg (30) angeordnet sind,
- bei dem die Schaltung (200) eingerichtet ist, eine zweite Untermenge (M2) der Menge (M) zu bilden,
- bei dem die Schaltung (200) eingerichtet ist, die zur zweiten Untermenge (M2) zugehörigen Identifikatoren (ID14, ID15) an die zweite Schreibeinrichtung (120) zu senden, um die Daten (Dat) auf die RFID-Transponder (14, 15) der zweiten Untermenge (M2) mittels der zweiten Schreibeinrichtung (120) zu schreiben,
**dadurch gekennzeichnet, dass** die Schaltung (200) dazu eingerichtet ist, die erste Untermenge (M1) dynamisch basierend auf der Anzahl der Elemente der Menge (M) zu bilden und die zweite Untermenge (M2) aus in der ersten Schreibeinrichtung (110) nicht-geschriebenen RFID-Transpondern (14, 15) zu bilden.

2. System nach Anspruch 1,
- bei dem die Leseeinrichtung (100) eine Lesezone aufweist, durch die der Förderweg (30) führt, um jedes Stück (21, 22, 23, 24, 25) mit RFID-Transponder (11, 12, 13, 14, 15) mittels des Förderers hindurch zu bewegen,
und
- bei dem die erste Schreibeinrichtung (110) eine erste Schreibzone aufweist, durch die der Förderweg (30) führt, um jedes Stück (21, 22, 23, 24, 25) mit RFID-Transponder (11, 12, 13, 14, 15) mittels des Förderers hindurch zu bewegen,
und
- bei dem die zweite Schreibeinrichtung (120) eine zweite Schreibzone aufweist, durch die der Förderweg (30) führt, um jedes Stück (21, 22, 23, 24, 25) mit RFID-Transponder (11, 12, 13, 14, 15) mittels des Förderers hindurch zu bewegen.

3. System nach einem der vorhergehenden Ansprüche,
- bei dem die Leseeinrichtung (100) zur Durchführung des Stückguts (21, 22, 23, 24, 25) entlang des Förderweges (30) eine Eingangsöffnung (101) und eine Ausgangsöffnung (102) aufweist,
- bei dem die Leseeinrichtung (100) eine Schirmungseinrichtung (190) aufweist, die an der Eingangsöffnung (101) und/oder an der Ausgangsöffnung (102) angrenzend ausgebildet ist, und
- bei dem der Förderweg (30) durch die Schirmungseinrichtung (190) führt.

4. System nach einem der vorhergehenden Ansprüche,
- bei dem die erste Schreibeinrichtung (110) eingerichtet ist, die Daten (Dat) auf die RFID-Transponder (11, 12, 13) der ersten Untermenge (M1) sequenziell zu schreiben basierend auf einer vorbestimmten Reihenfolge der Identifikatoren (ID11, ID12, ID13) der ersten Untermenge (M1),
und/oder
- bei dem die zweite Schreibeinrichtung (120) eingerichtet ist, die Daten (Dat) auf die RFID-Transponder (14, 15) der zweiten Untermenge (M2) sequenziell zu schreiben basierend auf einer vorbestimmten Reihenfolge der Identifikatoren (ID14, ID15) der zweiten Untermenge (M2).

5. System nach einem der vorhergehenden Ansprüche,
- bei dem die RFID-Transponder (11, 12, 13, 14, 15) in Kleidungsstücke als Stückgut (21, 22, 23, 24, 25) eingefasst sind.

6. System nach einem der vorhergehenden Ansprüche,
- bei dem die Schaltung (200) eingerichtet ist, die Identifikatoren (ID11, ID12, ID13, ID14, ID15) und die Daten (Dat) an die erste Schreibeinrichtung (110) und/oder an die zweite Schreibeinrichtung (120) basierend auf einer Abfolge mehrerer Mengen (L, M, N) zu senden.

7. Verfahren zum Schreiben von RFII-Transpondern (11, 12, 13, 14, 15) einer Menge (M) von mittels eines Förderers entlang eines Förderweges (30) transportiertem Stückgut (21, 22, 23, 24, 25), mit den Schritten:
- Lesen der RFID-Transponder (11, 12, 13, 14, 15) beim Transport entlang des Förderweges (30) mittels einer Leseeinrichtung (100),
- Zuordnen jedes mittels der Leseeinrichtung (100) ausgelesenen Identifikators (ID11, ID12, ID13, ID14, ID15) jedes RFID-Transponders (11, 12, 13, 14, 15) zur Menge (M), insbesondere zu einer Mengenkennung (IM) der Menge (M), wobei insbesondere jeder Transponder (11, 12, 13, 14, 15) an einem Stück (21, 22, 23, 24, 25) der Menge (M) befestigt ist,
- dynamisch bilden einer ersten Untermenge (M1) der Menge (M) basierend auf der Anzahl der Elemente der Menge, die Untermenge (M1) ist ein Bruchteil der Menge (M),
- Senden der zur ersten Untermenge (M1) zugehörigen Identifikatoren (ID11, ID12, ID13) an eine erste Schreibeinrichtung (110),
- Schreiben von Daten (Dat) auf die RFID-Transponder (11, 12, 13) der ersten Untermenge (M1) beim Transport entlang des Förderweges (30) mittels der ersten Schreibeinrichtung (110),
- Bilden einer zweiten Untermenge (M2) der Menge (M) aus in der ersten Schreibeinrichtung (110) nicht-geschriebenen RFID-Transpondern (14, 15),
- Senden der zur zweiten Untermenge (M2) zugehörigen Identifikatoren (ID14, ID15) an eine zweite Schreibeinrichtung (120), und
- Schreiben von Daten (Dat) auf die RFID-Transponder (14, 15) der zweiten Untermenge (M2) mittels der zweiten Schreibeinrichtung (120).

## Claims

1. A system for encoding RFID transponders (11, 12, 13, 14, 15) of a set (M) of load items (21, 22, 23, 24, 25) transported along a conveying path (30) by means of a conveyor,
- having reading means (100) for reading said RFID transponders (11, 12, 13, 14, 15) during their transportation along said conveying path (30),
- having a first encoding means (110) for encoding said RFID transponders (11, 12, 13, 14, 15) with data (Dat) during their transportation along said conveying path (30),
- having circuitry (200) connected to said reading means (100) and to said first encoding means (110),
- wherein said reading means (100) and said first encoding means (110) are arranged spaced apart from one another on said conveying path (30),
- wherein said circuitry (200) is adapted to assign to said set (M) every identifier (ID11, ID12, ID13, ID14, ID15) of each RFID transponder (11, 12, 13, 14, 15) read out by means of said reading means (100), said RFID transponder (11, 12, 13, 14, 15) being attached to an item (21, 22, 23, 24, 25) of said set (M),
- wherein said circuitry (200) is adapted to form a first subset (M1) of said set (M),
and said subset (M1) is a fraction of said set (M),
- wherein said circuitry (200) is adapted to transmit to said first encoding means (110) the identifiers (ID11, ID12, ID13) associated with said first subset (M1) in order to encode said data (Dat) on said RFID transponders (11, 12, 13) of said first subset (M1) by means of said first encoding means (110),
- having a second encoding means (120) for encoding said RFID transponders (11, 12, 13, 14, 15) with data (Dat) during their transportation along said conveying path (30),
- wherein said circuitry (200) is connected to said second encoding means (120),
- said first encoding means (110) and said second encoding means (120) are arranged spaced apart from one another on said conveying path (30),
- wherein said circuitry (200) is adapted to form a second subset (M2) of said set (M),
- wherein said circuitry (200) is adapted to transmit to said second encoding means (120) the identifiers (ID14, ID15) associated with said second subset (M2) in order to encode said data (Dat) on said RFID transponders (14, 15) of said second subset (M2) by means of said second encoding means (120),
**characterised in that** said circuitry (200) is adapted to form said first subset (M1) dynamically based on the number of elements of said set (M) and to form said second subset (M2) from RFID transponders (14, 15) not encoded in said first encoding means (110).

2. The system as claimed in claim 1,
- wherein the reading means (100) comprises a reading zone through which the conveying path (30) leads in order to guide through each item (21, 22, 23, 24, 25) with an RFID transponder (11, 12, 13, 14, 15) by means of the conveyor,
and
- wherein the first encoding means (110) comprises an encoding zone through which said conveying path (30) leads in order to guide through each item (21, 22, 23, 24, 25) with an RFID transponder (11, 12, 13, 14, 15) by means of said conveyor,
and
- wherein the second encoding means (120) comprises a second encoding zone through which said conveying path (30) leads in order to guide through each item (21, 22, 23, 24, 25) with an RFID transponder (11, 12, 13, 14, 15) by means of said conveyor.

3. The system as claimed in any of the preceding claims,
- wherein the reading means (100) comprises an entry opening (101) and an exit opening (102) for conveying the load items (21, 22, 23, 24, 25) along the conveying path (30),
- wherein said reading means (100) comprises a shield means (190) formed adjacent to said entry opening (101) and/or said exit opening (102), and
- wherein said conveying path (30) leads through said shield means (190).

4. The system as claimed in any of the preceding claims,
- wherein the first encoding means (110) is adapted to encode the data (Dat) on the RFID transponders (11, 12, 13) of the first subset (M1) sequentially, based on a predetermined order of the identifiers (ID11, ID12, ID13) of said first subset (M1),
and/or
- wherein the second encoding means (120) is adapted to encode the data (Dat) on the RFID transponders (14, 15) of the second subset (M2) sequentially, based on a predetermined order of the identifiers (ID14, ID15) of said second subset (M2),

5. The system as claimed in any of the preceding claims,
- wherein the RFID transponders (11, 12, 13, 14, 15) are fitted into the trim of items of clothing as load items (21, 22, 23, 24, 25).

6. The system as claimed in any of the preceding claims,
- wherein the circuitry (200) is adapted to transmit the identifiers (ID11, ID12, ID13, ID14, ID15) and the data (Dat) to the first encoding means (110) and/or to the second encoding means (120) based on a sequence of a plurality of sets (L, M, N).

7. A method of encoding RFID transponders (11, 12, 13, 14, 15) of a set (M) of load items (21, 22, 23, 24, 25) transported along a conveying path (30) by means of a conveyor, comprising the steps of:
- reading said RFID transponders (11, 12, 13, 14, 15) during their transportation along said conveying path (30) by means of a reading means (100),
- assigning to said set (M) every identifier (ID11, ID12, ID13, ID14, ID15) of each RFID transponder (11, 12, 13, 14, 15) read out by means of said reading means (100), and especially to a set identifier (IM) of said set (M), wherein in particular each transponder (11, 12, 13, 14, 15) is attached to an item (21, 22, 23, 24, 25) of said set (M),
- dynamically forming a first subset (M1) of said set (M) based on the number of elements of said set, said subset (M1) being a fraction of said set (M),
- transmitting to a first encoding means (110) the identifiers (ID11, ID12, ID13) associated with said first subset (M1),
- encoding data (Dat) on the RFID transponders (11, 12, 13) of said first subset (M1) during their transportation along said conveying path (30), by means of said first encoding means (110),
- forming a second subset (M2) of said set (M) from RFID transponders (14, 15) not encoded in said first encoding means (110),
- transmitting to a second encoding means (120) the identifiers (ID14, ID15) associated with said second subset (M2), and
- encoding data (Dat) on said RFID transponders (14, 15) of said second subset (M2) by means of said second encoding means (120).

## Revendications

1. Système d'écriture de transpondeurs RFID (11, 12, 13, 14, 15) d'une quantité (M) de produits en vrac (21, 22, 23, 24, 25) transportés le long d'un trajet de convoyage (30) au moyen d'un convoyeur,
- avec un dispositif de lecture (100) destiné à lire les transpondeurs RFID (11, 12, 13, 14, 15) lors du transport le long du trajet de convoyage (30),
- avec un premier dispositif d'écriture (110) destiné à décrire les transpondeurs RFID (11, 12, 13, 14, 15) avec des données (Dat) lors du transport le long du trajet de convoyage (30),
- avec un circuit (200), qui est relié au dispositif de lecture (100) et au premier dispositif d'écriture (110),
- où le dispositif de lecture (100) et le premier dispositif d'écriture (110) sont disposés de manière espacée l'un de l'autre sur le trajet de convoyage (30),
- où le circuit (200) est mis au point pour attribuer chaque identificateur (ID11, ID12, ID13, ID14, ID15) lu au moyen du dispositif de lecture (100) de chaque transpondeur RFID (11, 12, 13, 14, 15) à la quantité (M), dans lequel le transpondeur RFID (11, 12, 13, 14, 15) est fixé sur une pièce (21, 22, 23, 24, 25) de la quantité (M),
- où le circuit (200) est mis au point pour former une première sous-quantité (M1) de la quantité (M),
et la sous-quantité (M1) est une fraction de la quantité (M),
- où le circuit (200) est mis au point pour envoyer au premier dispositif d'écriture (110) les identificateurs (ID11, ID12, ID13) associés à la première sous-quantité (M1) pour écrire les données (Dat) sur les transpondeurs RFID (11, 12, 13) de la première sous-quantité (M1) au moyen du premier dispositif d'écriture (110),
- avec un deuxième dispositif d'écriture (120) pour décrire les transpondeurs RFID (11, 12, 13, 14, 15) avec des données (Dat) lors du transport le long du trajet de convoyage (30),
- où le circuit (200) est relié au deuxième dispositif d'écriture (120),
- le premier dispositif d'écriture (110) et le deuxième dispositif d'écriture (120) sont disposés de manière espacée l'un de l'autre sur le trajet de convoyage (30),
- où le circuit (200) est mis au point pour former une deuxième sous-quantité (M2) de la quantité (M),
- où le circuit (200) est mis au point pour envoyer au deuxième dispositif d'écriture (120) les identificateurs (ID14, ID15) associés à la deuxième sous-quantité (M2) pour écrire les données (Dat) sur les transpondeurs RFID (14, 15) de la deuxième sous-quantité (M2) au moyen du deuxième dispositif d'écriture (120),
**caractérisé en ce que** le circuit (200) est mis au point pour former de manière dynamique sur la base du nombre des éléments de la quantité (M) la première sous-quantité (M1) et pour former la deuxième sous-quantité (M2) à partir de transpondeurs RFID (14, 15) non écrits dans le premier dispositif d'écriture (110).

2. Système selon la revendication 1,
- où le dispositif de lecture (100) présente une zone de lecture, à travers laquelle mène le trajet de convoyage (30) pour déplacer de part en part chaque pièce (21, 22, 23, 24, 25) avec un transpondeur RFID (11, 12, 13, 14, 15) au moyen du convoyeur,
et
- où le premier dispositif d'écriture (110) présente une première zone d'écriture, à travers laquelle mène le trajet de convoyage (30) pour déplacer de part en part chaque pièce (21, 22, 23, 24, 25) avec un transpondeur RFID (11, 12, 13, 14, 15) au moyen du convoyeur,
et
- où le deuxième dispositif d'écriture (120) présente une deuxième zone d'écriture, à travers laquelle mène le trajet de convoyage (30) pour déplacer de part en part chaque pièce (21, 22, 23, 24, 25) avec un transpondeur RFID (11, 12, 13, 14, 15) au moyen du convoyeur.

3. Système selon l'une quelconque des revendications précédentes,
- où le dispositif de lecture (100) présente une ouverture d'entrée (101) et une ouverture de sortie (102) pour guider de part en part les produits en vrac (21, 22, 23, 24, 25) le long du trajet de convoyage (30),
- où le dispositif de lecture (100) présente un dispositif de protection (190), qui est réalisé de manière à jouxter l'ouverture d'entrée (101) et/ou l'ouverture de sortie (102), et
- où le trajet de convoyage (30) mène à travers le dispositif de protection (190).

4. Système selon l'une quelconque des revendications précédentes,
- où le premier dispositif d'écriture (110) est mis au point pour écrire de manière séquentielle les données (Dat) sur les transpondeurs RFID (11, 12, 13) de la première sous-quantité (M1) sur la base d'un ordre prédéfini des identificateurs (ID11, ID12, ID13) de la première sous-quantité (M1),
et/ou
- où le deuxième dispositif d'écriture (120) est mis au point pour écrire de manière séquentielle les données (Dat) sur les transpondeurs RFID (14, 15) de la deuxième sous-quantité (M2) sur la base d'un ordre prédéfini des identificateurs (ID14, ID15) de la deuxième sous-quantité (M2).

5. Système selon l'une quelconque des revendications précédentes,
- où les transpondeurs RFID (11, 12, 13, 14, 15) sont intégrés dans des pièces de vêtement en tant que produits en vrac (21, 22, 23, 24, 25).

6. Système selon l'une quelconque des revendications précédentes,
- où le circuit (200) est mis au point pour envoyer les identificateurs (ID11, ID12, ID13, ID14, ID15) et les données (Dat) au premier dispositif d'écriture (110) et/ou au deuxième dispositif d'écriture (120) sur la base d'une séquence de plusieurs quantités (L, M, N).

7. Procédé d'écriture de transpondeurs RFID (11, 12, 13, 14, 15) d'une quantité (M) de produits en vrac (21, 22, 23, 24, 25) transportés le long d'un trajet de convoyage (30) au moyen d'un convoyeur, avec les étapes :
- de lecture des transpondeurs RFID (11, 12, 13, 14, 15) lors du transport le long du trajet de convoyage (30) au moyen du dispositif de lecture (100),
- d'association de chaque identificateur (ID11, ID12, ID13, ID14, ID15) lu au moyen du dispositif de lecture (100) de chaque transpondeur RFID (11, 12, 13, 14, 15) à la quantité (M), en particulier à un code de quantité (IM) de la quantité (M), dans lequel en particulier chaque transpondeur (11, 12, 13, 14, 15) est fixé sur une pièce (21, 22, 23, 24, 25) de la quantité (M),
- de formation dynamique d'une première sous-quantité (M1) de la quantité (M) sur la base du nombre des éléments de la quantité, la sous-quantité (M1) étant une fraction de la quantité (M),
- d'envoi des identificateurs (ID11, ID12, ID13) associés à la première sous-quantité (M1) à un premier dispositif d'écriture (110),
- d'écriture de données (Dat) sur les transpondeurs RFID (11, 12, 13) de la première sous-quantité (M1) lors du transport le long du trajet de convoyage (30) au moyen du premier dispositif d'écriture (110),
- de formation d'une deuxième sous-quantité (M2) de la quantité (M) à partir de transpondeurs RFID (14, 15) non écrits dans le premier dispositif d'écriture (110),
- d'envoi des identificateurs (ID14, ID15) associés à la deuxième sous-quantité (M2) à un deuxième dispositif d'écriture (120), et
- d'écriture de données (Dat) sur les transpondeurs RFID (14, 15) de la deuxième sous-quantité (M2) au moyen du deuxième dispositif d'écriture (120).
